# EUROPEAN PATENT SPECIFICATION

(11) **EP 4 082 872 B1**
(45) Date of publication and mention of the grant of the patent: **22.11.2023**
(21) Application number: 21170382.2
(22) Date of filing: 26.04.2021
(51) Int. Cl.: B62D 5/06, B62D 15/02

(54) **METHOD FOR CALIBRATING A FULLY HYDRAULIC STEERING SYSTEM**
VERFAHREN ZUR KALIBRIERUNG EINES VOLLHYDRAULISCHEN LENKSYSTEMS
PROCÉDÉ D'ÉTALONNAGE D'UN SYSTÈME DE DIRECTION ENTIÈREMENT HYDRAULIQUE

(43) Date of publication of application: 02.11.2022
(73) Proprietor: Danfoss Power Solutions ApS, 6430 Nordborg (DK)
(72) Inventor: Petersen, Morten Hoeck, 6430 Nordborg (DK)
(74) Representative: Keil & Schaafhausen Patentanwälte PartGmbB

(56) References cited:
- US-A1- 2009 033 053

## Description

The present invention relates to a method for calibrating a fully hydraulic steering system of a vehicle having steered wheels and a hydraulic steering motor, in which method the steered wheels are moved by the motor in one direction until they reach a first end position and are then moved in the opposite direction until they reach a second end position.

In a fully hydraulic steering system there is no mechanical connection between a steering command device, for example a steering wheel or a joy stick, and the steered wheels. Thus, it is not possible to move the steered wheels manually from one end position to the other.

Nevertheless, for a reliable control of the steering system it is necessary to know the "neutral position" of the steered wheels in which the vehicle drives straight ahead. Thus, a calibration of the fully hydraulic steering system is necessary from time to time. Document US 2009/0033053 A1 describes a method for calibrating a hydraulic steering system and discloses the preamble of the independent claim.

The object underlying the invention is to calibrate a fully hydraulic steering system.

This object is solved in that the steering motor is supplied with a constant flow of hydraulic fluid and the time of movement between the one end position of the steered wheels and the other end position of the steered wheels is determined, wherein a neutral position of the steering motor is adjusted by supplying the constant flow to the steering motor over half of the determined time.

In this way it is only necessary to measure the time which is necessary to move the steered wheels between the two end positions, provided that this movement is performed under constant conditions. This constant condition is the constant flow, so that the steering motor is driven by the same flow over the complete movement of the steered wheels. It can then be assumed that after half of the time the steered wheels are in their neutral position in which the vehicle can drive straight ahead. Using the time is a rather simple way to determine the neutral position.

In an embodiment of the invention the steering motor is supplied with a constant flow of hydraulic fluid and the time of a first movement from the first end position of the steered wheels to the second end position of the steered wheels and the time of a second movement back from the second end position of the steered wheels to the first end position of the steered wheels is determined, wherein the neutral position of the steering motor is adjusted by supplying the constant flow to the steering motor over half of the average of the time of a first movement and the time of the second movement. In this way it is possible to compensate for small differences between a movement in one direction and a movement in the other direction.

In an embodiment of the invention the hydraulic fluid is supplied via a valve having a constant opening degree during the movement. Provided that the pressure of the hydraulic fluid is constant during the movement, which can usually be achieved without problems, a constant opening degree of the valve secures a constant flow of the hydraulic fluid. This is a simple way of supplying hydraulic fluid to the steering motor during the calibration.

In an embodiment of the invention the valve is a spool valve having a spool controlling the flow of the supplied hydraulic fluid, wherein the spool has a constant spool set point during the movement in one direction and a constant spool set point during the movement in the opposite direction. A spool valve is used in many fully hydraulic steerings. It can be used for the calibration. A spool valve does not only control the amount of flow of hydraulic fluid, but also the direction.

Thus, it is possible that the spool has two set points, one for each direction. In this way it is possible to determine the neutral point of the steering motor in a simple way.

In an embodiment of the invention the wheel angle of the steered wheels is determined by means of at least one-wheel angle sensor. The output of the wheel angle sensor in the neutral position of the steering motor can then be used during the further operation of the fully hydraulic steering system as neutral point.

In an embodiment of the invention an end position is detected when a signal of the wheel angle sensor does not change for a predetermined period of time. The wheel angle sensor can further be used to indicate that the wheels have reached their end position. The predetermined period of time can be, for example, one second.

In an embodiment of the invention a function of the wheel angle of the steered wheels over time is determined during the movement of the steered wheels, wherein the function is used to calibrate the wheel angle sensor. The wheel angle of the steered wheels is detected by means of the wheel angle sensor. In particular with a steering in which the steering motor is connected to the steered wheels via an Ackermann geometry, in which the radially inner wheel in a curve has a larger wheel angle than the radially outer wheel, the behaviour of the steered wheels is non-linear. However, when the output of the wheel angle sensor, i.e. the function, is known and compared with the position of the steering motor, an information can be gained to calibrate the position of the steering motor to the steering angle.

In an embodiment of the invention the calibration is made by using a difference between the function determined and a linear function. The linear function is used to represent the linear behaviour of the steering motor when driven with a constant flow. A difference between this linear behaviour and the fully steering angle can then be used to calibrate the wheel angle sensor.

In an embodiment of the invention in addition to determining the neutral point of the steering motor hydraulic fluid is supplied with a varying flow and the response of the steering system is determined. Thus, when the neutral point has been determined, further information can be gained. This information relates to a transfer function of the steering system. When the steering motor is supplied with a varying flow and the response is detected by the wheel angle sensors, at least one parameter of the transfer function of the steering system can be obtained.

In an embodiment of the invention the varying flow is varied stepwise.

In an embodiment of the invention the varying flow is varied sinusoidally.

In an embodiment of the invention the varying flow is varied in form of a random noise. It is of course possible, to use all kinds of varying flow in different time periods in order to determine a number of parameters of the steering system.

An embodiment of the invention will now be described with reference to the drawing, in which:
- Fig. 1: shows schematically components of a fully hydraulic steering of a vehicle and
- Fig. 2: shows some drafts for the illustration of the calibration of the fully hydraulic steering according to Fig. 1.

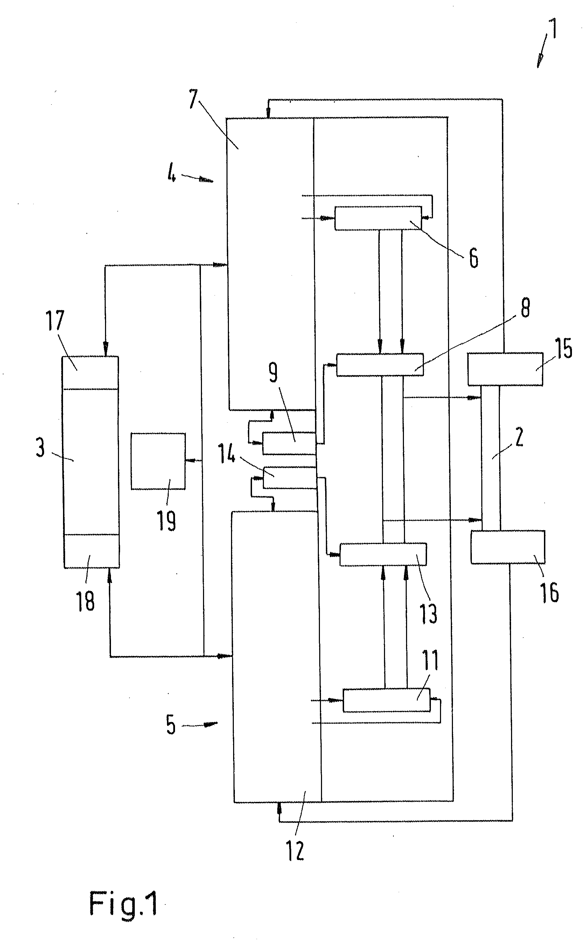

Fig. 1 shows schematically components of a fully hydraulic steering system 1 of a vehicle. The vehicle has steered wheels and a hydraulic steering motor 2. The steering motor 2 is used to move the steered wheels. In the following the term "moving" relates to the change of the angle of the wheels which in turn changes the direction in which the vehicle drives. The steering motor 2 is preferably in form of a steering cylinder.

The system 1 comprises a steering command device 3, for example a steering wheel or a joystick. Furthermore, the system comprises two branches 4, 5 which are arranged in parallel. Each of the branches 4, 5 is able to control the steering of the vehicle, so that a fail operational operation is possible. In case one of the branches 4, 5 fails, the other branch 4, 5 can be used to steer the vehicle.

The first branch 4 comprises a main spool valve having a main spool 6, the position of which is controlled by a pilot valve arrangement 7. The pilot valve arrangement 7 can, for example, comprise four solenoid valves producing a pressure acting on the main spool 6 and adjusting the position of the main spool 6. Furthermore, the first branch 4 comprises a safety valve 8 which is controlled by a safety valve solenoid 9.

The second branch 5 is identical. It comprises a main spool valve having a main spool 11 which is controlled by a pilot valve arrangement 12. Furthermore, the second branch comprises a safety valve 13 which is controlled by a safety valve solenoid 14.

Both spool valves control a flow of hydraulic fluid to the steering motor 2.

The system 1 comprises furthermore two-wheel angle sensors 15, 16. In Fig. 1 these wheel angle sensors are shown connected to the steering motor 2. It is, however, also possible to locate the wheel angle sensors 15, 16 in a position of the steered wheels.

The steering command device 3 is also provided with sensors 17, 18. Furthermore, a MMI/service tool 19 is provided for triggering the calibration of the system.

In the fully hydraulic steering system 1 there is no mechanical connection between the steering command device 3 and the steering motor 2. Therefore, it is not possible to manually actuate the steered wheels in order to find out a position, in which the steered wheels are in a neutral position. The neutral position is the position in which the vehicle is driven straight forward.

Thus, in order to find out this position, it is necessary to calibrate the steering system 1.

The calibration of the steering system 1 is made automatically in a condition of the vehicle, in which the vehicle stands still or is driven with a very low speed in an area, in which there are no obstacles or points of danger.

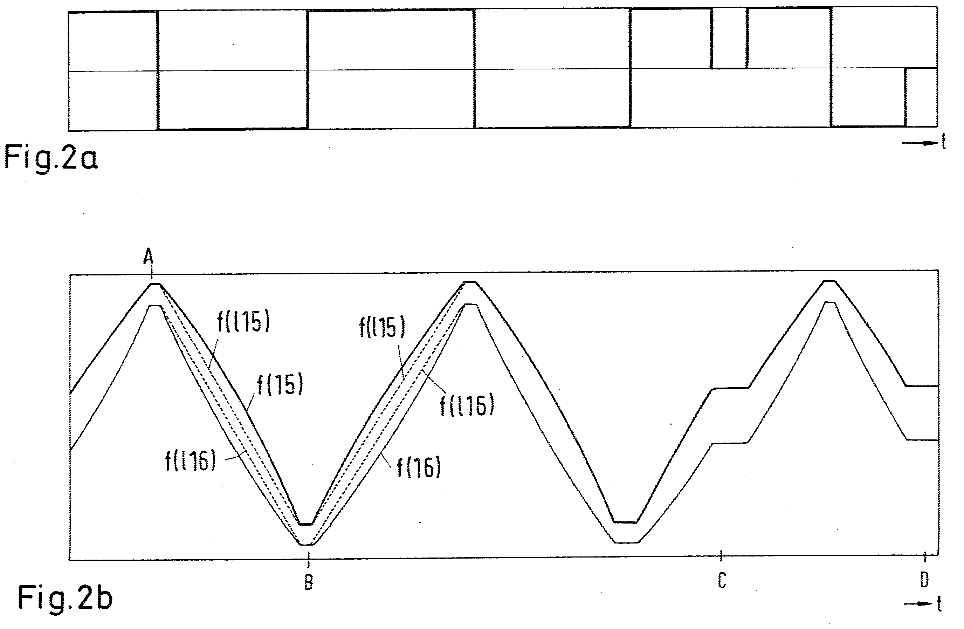

In order to calibrate the fully hydraulic system 1, the steering motor 2 is supplied with a constant flow of hydraulic fluid to move the steering motor 2 in one direction until the steered wheels come to a first end position. This is schematically shown in Fig. 2. Fig. 2a shows the flow of hydraulic fluid to the steering motor 2 and Fig. 2b shows the wheel angle of the steered wheels.

A straight line in Fig. 2a indicates a zero flow. A line above this straight line indicates a positive flow and a line below the straight line indicates a negative flow, i.e. a flow of hydraulic fluid in the reverse direction.

Fig. 2b shows two graphs f(15), f(16), because the system comprises two-wheel angle sensors 15, 16.

Once the steered wheels have reached a first end position (point A in Fig. 2b), the flow is reversed and the steered wheels move back from the first end position to a second end position (point B in Fig. 2b). An end position is assumed, when the signal of the wheel angle sensors 15, 16 does not change for a predetermined time period, for example 1s.

The time needed for the movement between the first end position A and the second end position B is measured. For the purpose of the following explanation, this time is named "first time".

After reaching the second end position B the flow to the steering motor 2 is reversed, so that the steered wheels move back from the second end position B to the first end position A. The time needed for the movement of the steered wheels from the second end position to the first end position is measured. This is a "second time".

The movement from the second end position to the first end position is also made with a constant flow of hydraulic fluid. This constant flow has the same magnitude as for the movement of the steered wheels in the opposite direction.

In order to find out the neutral position of the steering motor 2, the same constant flow of hydraulic fluid to the steering motor 2 is then used, however, applied only for half of the time which is needed for a movement between the two end positions. More precisely, the total first time is halved to make the first move to neutral, and the total second time is halved to make the second move to neutral. The steering motor 2 has then assumed its neutral position and the corresponding angle given out from the wheel angle sensors 15, 16 can be recorded and stored, for example in the MMI/service tool 19. It can be seen that the corresponding signals of the two-wheel angle sensors 15, 16 differ. Thus, it is advisable to store the values of both wheel angle sensors 15, 16.

It is also possible to drive (after reaching the neutral point for the first time) the driven wheels again in the first end position and reverse then the direction of flow and to supply the constant flow to the steering motor 2 over half of the time needed for a movement between the two end positions to reach the neutral position for a second time. The first time the neutral time has been reached is labled "C" and the second time the neutral position has been reached is labled "D". It can be seen that the signals of the wheel angle sensors 15, 16 are not identical in the two positions C, D. The possible solution is therefore to use a mean value of the two signals of one-wheel angle sensor 15 and to use a mean value of the two signals of the other wheel angle sensor 16.

Fig. 2b shows, as mentioned above, two functions. A first function f(15) is the output signal of wheel angle sensor 15 and the second function f(16) is the output signal of the second wheel angle sensor 16, each function is the wheel angle over the time.

It can be seen that the two function f(15) and f(16) are not linear. In order to show this, linear functions f(l15) and f(l16) has been added to the graphs. The difference between the graphs f(15) and f(l15) or f(16) and f(l16) can be used to calibrate the wheel angle sensors 15, 16. In this case it is possible to assign to a certain output of the wheel angle sensor 15, 16 the "true" wheel angles.

The constant flow can be supplied by only one of the branches 4, 5 or it can be supplied by a combined flow of the two branches 4, 5.

In both cases the main spool 6, 11 is responsible for the respective flows. The spools 6, 11 are adjusted to a certain set point for one direction of movement and to a certain set point for the other direction of movement. The respective spool 6, 11 does not only adjust the amount of the flow, but also the direction. Thus, it is possible that the spool 6, 11 has a constant spool set point during the movement in one direction and a constant spool set point during the movement in the opposite direction.

Once the neutral position of the steering motor 2 has been identified, the system can further be operated to determine further characteristics.

The steering system 1 has a transfer function, which shows the reaction of the output 8 (the movement of the steered wheels) to an input (the command of the steering command device 3). In order to find out parameters of this transfer function, the steering motor 2 can be supplied with a varying flow. The variation of the flow can be stepwise or sinusoidally or it can be in form of a random noise. A varying flow (dependant on the mode of variation) will cause a variation of the movement of the steered wheels, wherein in most cases the dependency between the variation of the flow and the variation of the movement of the steered wheels is non-linear.

## Claims

1. Method for calibrating a fully hydraulic steering system (1) of a vehicle having steered wheels and a hydraulic steering motor (2), in which method the steered wheels are moved by the steering motor (2) in one direction until they reach a first end position (A) and are then moved in the opposite direction until they reach a second end position (B), **characterized in that** the steering motor (2) is supplied with a constant flow of hydraulic fluid and the time of movement between the one end position (A) of the steered wheels and the other end position (B) of the steered wheels is determined, wherein a neutral position of the steering motor (2) is adjusted by supplying the constant flow to the steering motor (2) over half of the determined time.

2. Method according to claim 1, **characterized in that** the steering motor (2) is supplied with a constant flow of hydraulic fluid and the time of a first movement from the first end position (A) of the steered wheels to the second end position (B) of the steered wheels and the time of a second movement back from the second end position (B) of the steered wheels to the first end position (A) of the steered wheels is determined, wherein the neutral position of the steering motor (2) is adjusted by supplying the constant flow to the steering motor (2) over half of the average of the time of the first movement and the time of the second movement.

3. Method according to claim 1 or 2, **characterized in that** the hydraulic fluid is supplied via a valve having a constant opening degree during the movement.

4. Method according to claim 3, **characterized in that** the valve is a spool valve having a spool (6, 11) controlling the flow of the supplied hydraulic fluid, wherein the spool (6, 11) has a constant spool set point during the movement in one direction and a constant spool set point during the movement in the opposite direction.

5. Method according to any of claims 1 to 4, **characterized in that** the wheel angle of the steered wheels is determined by means of at least one-wheel angle sensor (15, 16).

6. Method according to claim 5, **characterized in that** an end position is detected when a signal of the wheel angle sensor (15, 16) does not change for a predetermined period of time

7. Method according to claim 5 or 6, **characterized in that** a function (f(15), f(16)) of the wheel angle of the steered wheels over time is determined during the movement of the steered wheels, wherein the function (f(15), f(16)) is used to calibrate the wheel angle sensor (15, 16).

8. Method according to claim 7, **characterized in that** the calibration is made by using a difference between the function (f(15), f(16)) determined and a linear function (f(l15), f(l16)).

9. Method according to any of claims 1 to 8, **characterized in that** in addition to determining the neutral point of the steering motor (2) hydraulic fluid is supplied with a varying flow and the response of the steering system (1) is determined.

10. Method according to claim 9, **characterized in that** the varying flow is varied stepwise.

11. Method according to claim 9 or 10, **characterized in that** the varying flow is varied sinusoidally.

12. Method according to any of claims 9 to 11, **characterized in that** the varying flow is varied in form of a random noise.

## Patentansprüche

1. Verfahren zum Kalibrieren eines vollhydraulischen Lenksystems (1) eines Fahrzeugs mit gelenkten Rädern und einem hydraulischen Lenkmotor (2), bei dem die gelenkten Räder durch den Lenkmotor (2) in einer Richtung bis zum Erreichen einer ersten Endstellung (A) und dann in der entgegengesetzten Richtung bis zum Erreichen einer zweiten Endstellung (B) bewegt werden, **dadurch gekennzeichnet, dass** der Lenkmotor (2) mit einem konstanten Fluss von Hydraulikflüssigkeit versorgt wird und die Zeit der Bewegung zwischen der einen Endposition (A) der gelenkten Räder und der anderen Endposition (B) der gelenkten Räder bestimmt wird, wobei eine neutrale Position des Lenkmotors (2) durch Zuführen des konstanten Flusses zum Lenkmotor (2) über die Hälfte der bestimmten Zeit eingestellt wird.

2. Verfahren nach Anspruch 1, **dadurch gekennzeichnet, dass** der Lenkmotor (2) mit einem konstanten Fluss von Hydraulikflüssigkeit versorgt wird und die Zeit einer ersten Bewegung von der ersten Endposition (A) der gelenkten Räder zur zweiten Endposition (B) der gelenkten Räder und die Zeit einer zweiten Bewegung zurück von der zweiten Endposition (B) der gelenkten Räder zur ersten Endposition (A) der gelenkten Räder bestimmt wird, wobei die Neutralstellung des Lenkmotors (2) eingestellt wird, indem der konstante Strom dem Lenkmotor (2) über die Hälfte des Durchschnitts der Zeit der ersten Bewegung und der Zeit der zweiten Bewegung zugeführt wird.

3. Verfahren nach Anspruch 1 oder 2, **dadurch gekennzeichnet, dass** die Hydraulikflüssigkeit über ein Ventil zugeführt wird, das während der Bewegung einen konstanten Öffnungsgrad aufweist.

4. Verfahren nach Anspruch 3, **dadurch gekennzeichnet, dass** das Ventil ein Schieberventil mit einem Schieber (6, 11) ist, der den Fluss der zugeführten Hydraulikflüssigkeit steuert, wobei der Schieber (6, 11) einen konstanten Schieber-Sollwert während der Bewegung in einer Richtung und einen konstanten Schieber-Sollwert während der Bewegung in der entgegengesetzten Richtung aufweist.

5. Verfahren nach einem der Ansprüche 1 bis 4, **dadurch gekennzeichnet, dass** der Radwinkel der gelenkten Räder mittels mindestens eines Radwinkelsensors (15, 16) ermittelt wird.

6. Verfahren nach Anspruch 5, **dadurch gekennzeichnet, dass** eine Endposition erkannt wird, wenn sich ein Signal des Radwinkelsensors ( 15, 16) über eine vorgegebene Zeitspanne nicht ändert.

7. Verfahren nach Anspruch 5 oder 6, **dadurch gekennzeichnet, dass** während der Bewegung der gelenkten Räder eine Funktion (f( 15), f(16)) des Radwinkels der gelenkten Räder über die Zeit ermittelt wird, wobei die Funktion (f(15), f(16)) zur Kalibrierung des Radwinkelsensors (15, 16) verwendet wird.

8. Verfahren nach Anspruch 7, **dadurch gekennzeichnet, dass** die Kalibrierung durch Verwendung einer Differenz zwischen der ermittelten Funktion (f(15), f(16)) und einer linearen Funktion (f(15), f(16)) erfolgt.

9. Verfahren nach einem der Ansprüche 1 bis 8, **dadurch gekennzeichnet, dass** zusätzlich zur Bestimmung des Neutralpunktes des Lenkmotors (2) Hydraulikflüssigkeit mit variierendem Durchfluss zugeführt und das Ansprechverhalten der Lenksystem (1) ermittelt wird.

10. Verfahren nach Anspruch 9, **dadurch gekennzeichnet, dass** der variierende Fluss schrittweise variiert wird.

11. Verfahren nach Anspruch 9 oder 10, **dadurch gekennzeichnet, dass** die variierende Strömung sinusförmig variiert wird.

12. Verfahren nach einem der Ansprüche 9 bis 11, **dadurch gekennzeichnet, dass** der variierende Fluss in Form eines Zufallsrauschens variiert wird.

## Revendications

1. Procédé permettant d'étalonner un système de direction entièrement hydraulique (1) d'un véhicule ayant des roues directrices et un moteur de direction hydraulique (2), dans lequel les roues directrices sont déplacées par le moteur de direction (2) dans une direction jusqu'à ce qu'elles atteignent une première position finale (A) puis sont déplacées dans la direction opposée jusqu'à ce qu'elles atteignent une seconde position finale (B), **caractérisé en ce que** le moteur de direction (2) est alimenté par un débit constant de fluide hydraulique et la durée de mouvement entre la position finale (A) des roues directrices et l'autre position finale (B) des roues directrices est déterminée, dans lequel une position neutre du moteur de direction (2) est ajustée en fournissant le débit constant au moteur de direction (2) sur la moitié de la durée déterminée.

2. Procédé selon la revendication 1, **caractérisé en ce que** le moteur de direction (2) est alimenté par un débit constant de fluide hydraulique et la durée d'un premier mouvement de la première position finale (A) des roues directrices à la seconde position finale (B) des roues directrices et la durée d'un second mouvement de retour de la seconde position finale (B) des roues directrices à la première position finale (A) des roues directrices sont déterminées, dans lequel la position neutre du moteur de direction (2) est ajustée en fournissant le débit constant au moteur de direction (2) sur la moitié de la moyenne de la durée du premier mouvement et de la durée du second mouvement.

3. Procédé selon la revendication 1 ou 2, **caractérisé en ce que** le fluide hydraulique est fourni via une vanne ayant un degré d'ouverture constant pendant le mouvement.

4. Procédé selon la revendication 3, **caractérisé en ce que** la vanne est un distributeur à tiroir ayant un tiroir (6, 11) régulant le débit du fluide hydraulique fourni, dans lequel le tiroir (6, 11) a une consigne de tiroir constante pendant le mouvement dans une direction et une consigne de tiroir constante pendant le mouvement dans la direction opposée.

5. Procédé selon l'une des revendications 1 à 4, **caractérisé en ce que** l'angle de roue des roues directrices est déterminé au moyen d'au moins un capteur d'angle de roue (15, 16).

6. Procédé selon la revendication 5, **caractérisé en ce qu'**une position finale est détectée lorsqu'un signal du capteur d'angle de roue (15, 16) ne change pas pendant une période déterminée.

7. Procédé selon la revendication 5 ou 6, **caractérisé en ce qu'**une fonction (f(15), f(16)) de l'angle de roue des roues directrices dans le temps est déterminée pendant le mouvement des roues directrices, dans lequel la fonction (f(15), f(16)) est utilisée pour étalonner le capteur d'angle de roue (15, 16).

8. Procédé selon la revendication 7, **caractérisé en ce que** l'étalonnage est effectué en utilisant une différence entre la fonction (f(15), f(16)) déterminée et une fonction linéaire (f(115), f(I16)).

9. Procédé selon l'une des revendications 1 à 8, **caractérisé en ce qu'**en plus de déterminer le point neutre du moteur de direction (2), le fluide hydraulique est fourni selon un débit variable et la réponse du système de direction (1) est déterminée.

10. Procédé selon la revendication 9, **caractérisé en ce que** le débit variable varie par paliers.

11. Procédé selon la revendication 9 ou 10, **caractérisé en ce que** le débit variable varie de manière sinusoïdale.

12. Procédé selon l'une quelconque des revendications 9 à 11, **caractérisé en ce que** le débit variable varie sous la forme d'un bruit aléatoire.
